Europäisches Patentamt

European Patent Office

Office européen des brevets

(19)

(11) Veröffentlichungsnummer: **0 180 986**
**A2**

(12) # EUROPÄISCHE PATENTANMELDUNG

(21) Anmeldenummer: 85114177.0

(22) Anmeldetag: 07.11.85

(51) Int. Cl.⁴: **G 05 D 11/03**

(30) Priorität: 07.11.84 DE 3440702
11.02.85 DE 3504583

(43) Veröffentlichungstag der Anmeldung:
14.05.86 Patentblatt 86/20

(84) Benannte Vertragsstaaten:
AT CH DE FR IT LI

(71) Anmelder: Selk, Kurt M., Dipl.-Ing.
Maxhofstrasse 37
D-8000 München 71(DE)

(72) Erfinder: Selk, Kurt M., Dipl.-Ing.
Maxhofstrasse 37
D-8000 München 71(DE)

(74) Vertreter: Tetzner, Volkmar, Dr.-Ing. Dr. Jur.
Van-Gogh-Strasse 3
D-8000 München 71(DE)

(54) Vorrichtung zur Dosierung von Zusatzstoffen.

(57) Die Erfindung betrifft eine Vorrichtung zur genau dosierten Zugabe kleinster Mengen von Zusatzstoffen zu einem flüssigen oder gasförmigen Medium unter Verwendung eines Dosierelementes, das aus einem hochporösen Sinterwerkstoff besteht. Eine derartige Vorrichtung zeichnet sich bei einfacher Bauweise durch eine sehr genaue und verläßliche Dosierung kleinster Mengen aus.

EP 0 180 986 A2

Croydon Printing Company Ltd

0180986

## Vorrichtung zur Dosierung von Zusatzstoffen

Die Erfindung betrifft eine Vorrichtung zur genau dosierten Zugabe kleinster Mengen von Zusatzstoffen zu einem flüssigen oder gasförmigen Medium.

Flüssige oder gasförmige Medien, wie Schmierstoffe, Kraftstoffe, Hydraulikflüssigkeiten, müssen vielfach mit sehr kleinen, jedoch genau dosierten Mengen von Zusatzstoffen versehen werden. Derartige Zusatzstoffe (Additive) erfüllen beispielsweise die Funktion von Detergentien, Dispersantstoffen, Neutralisierungskomponenten, Antioxydationsmitteln, Antiverschleißzusätzen, Korrosionsschutzmitteln, Stoffen zur Verbesserung des Viskositäts-Temperatur-Verhaltens, von Antischaumzusätzen, Verbrennungsförderern, Fließverbesserern usw.

Derartige Zusatzstoffe müssen teilweise bei der Erstbefüllung bzw. Inbetriebnahme der Anlage bzw. des Gerätes oder während des laufenden Betriebes, z.B. bei Motoren oder im Falle einer Additiverschöpfung, zugegeben werden.

Zur Zugabe kleiner Mengen von Zusatzstoffen zu einem flüssigen oder gasförmigen Medium sind bisher Einrichtungen wie Dochtöler, Tropföler sowie Zentralschmieranlagen bekannt. Sie sind jedoch für eine genaue Dosierung im ppm-Bereich nicht geeignet.

Der Erfindung liegt daher die Aufgabe zugrunde, eine Vorrichtung der im Oberbegriff des Anspruches 1 vorausgetzten Art (enthaltend einen Vorratsraum für den Zusatzstoff sowie ein zwischen dem Vorratsraum und dem das Medium führenden Raum angeordnetes Dosierelement, das für den Zusatzstoff durchlässig ist) so auszubilden, daß eine sehr genaue und zuverlässige Zugabe kleinster Mengen von Zusatzstoffen (im ppm-Bereich) möglich ist.

Diese Aufgabe wird erfindungsgemäß dadurch gelöst, daß das Dosierelement aus einem hochporösen Sinterwerkstoff besteht.

Als Sinterwerkstoffe für das Dosierelement der erfindungsgemäßen Vorrichtung kommen verschiedene hochporöse Sintermetalle in Betracht, insbesondere rostfreier Stahl, Sinterbronze sowie in besonderen Fällen korrosionsfeste und hochtemperaturbeständige Legierungen (insbesondere mit Gehalten von Nickel, Chrom, Molybdän und Titan).

Sintermetalle sind pulvermetallurgisch hergestellte Werkstoffe, deren wesentliches Kriterium neben der Festigkeit vor allem die Porengröße ist.

Erfindungsgemäß liegt die Porengröße des Sinterwerkstoffes zwischen 1 und 100 μm , vorzugsweise zwischen 1 und 20 μm.

- 3 -

0180986

Für die Zugabe von niedrigviskosen Zusatzstoffen zu Flüssigkeiten, wie Benzin, ist eine Porengröße des Sinterwerkstoffes zwischen 1 und 10 µm geeignet. Für die Zugabe von mittel- und hochviskosen Zusatzstoffen zu Flüssigkeiten, wie Mitteldestillaten, Heizöl und Hydraulikölen, aber auch Benzin, liegt die zweckmäßige Porengröße des Sinterwerkstoffes im allgemeinen zwischen 1 und 20 µm.

Die Dimensionierung des Dosierelementes der erfindungsgemäßen Dosiervorrichtung sei nachstehend an einem Beispiel erläutert.

Es sei angenommen, daß eine Heizölinhibierung von 250 ppm durchzuführen ist (d.h., daß ein Mischungsverhältnis von 1 : 4000 zwischen dem Zusatzstoff und dem Heizöl herzustellen ist). Will man diese Inhibierung über einen Zeitraum von 30 Tagen gleichmäßig vornehmen, so ergibt sich bei 1 l Additiv (auf 4000 l Heizöl) eine stündliche Zugabe von 1,389 cm³.

Zwischen der Menge V' des pro Zeiteinheit durch das Dosierelement hindurchtretenden Zusatzstoffes, der Porengröße p des Dosierelementes, der dynamischen Viskosität $\eta$ des Zusatzstoffes und den für die Durchströmung wesentlichen Abmessungen des Dosierelementes (wirksame durchströmte Fläche F und wirksame durchströmte Stärke s) besteht folgende Proportionalitätsbeziehung:

$$V' \sim \frac{p \cdot F}{\eta \, s}$$

Hat man daher für einen bestimmten Zusatzstoff und ein bestimmtes Dosierelement den Wert V' empirisch ermittelt, so läßt sich das für den gewünschten Wert V' notwendige Verhältnis F/s durch eine einfache Proportionalitätsbeziehung errechnen.

Eine Änderung der Porengröße (bei Wahl eines anderen Sinterwerkstoffes) oder eine Änderung von $\eta$ (bei Wahl eines anderen Zusatzstoffes) läßt sich in entsprechender Weise bei der Ermittlung von V' bzw. von F/s berücksichtigen.

Einige Ausführungsbeispiele der erfindungsgemäßen Vorrichtung sind in der Zeichnung schematisch veranschaulicht.

Es zeigen

Fig.1    eine Schemadarstellung eines ersten Ausführungsbeispieles der Erfindung,

Fig.2    eine Prinzipdarstellung einer zweiten Ausführungsvariante,

Fig.3    eine Schemadarstellung eines dritten Ausführungsbeispieles,

Fig.4    eine weitere Variante des Dosierelementes,

Fig.5     einen Schnitt durch ein weiteres Ausführungsbeispiel der Erfindung,

Fig.6     eine Aufsicht auf den Steuerdeckel des Ausführungsbeispieles gemäß Fig.5,

Fig.7, 8 und 9     je eine Aufsicht auf eine Variante einer Steuerscheibe des Ausführungsbeispieles gemäß Fig.5.

0180986

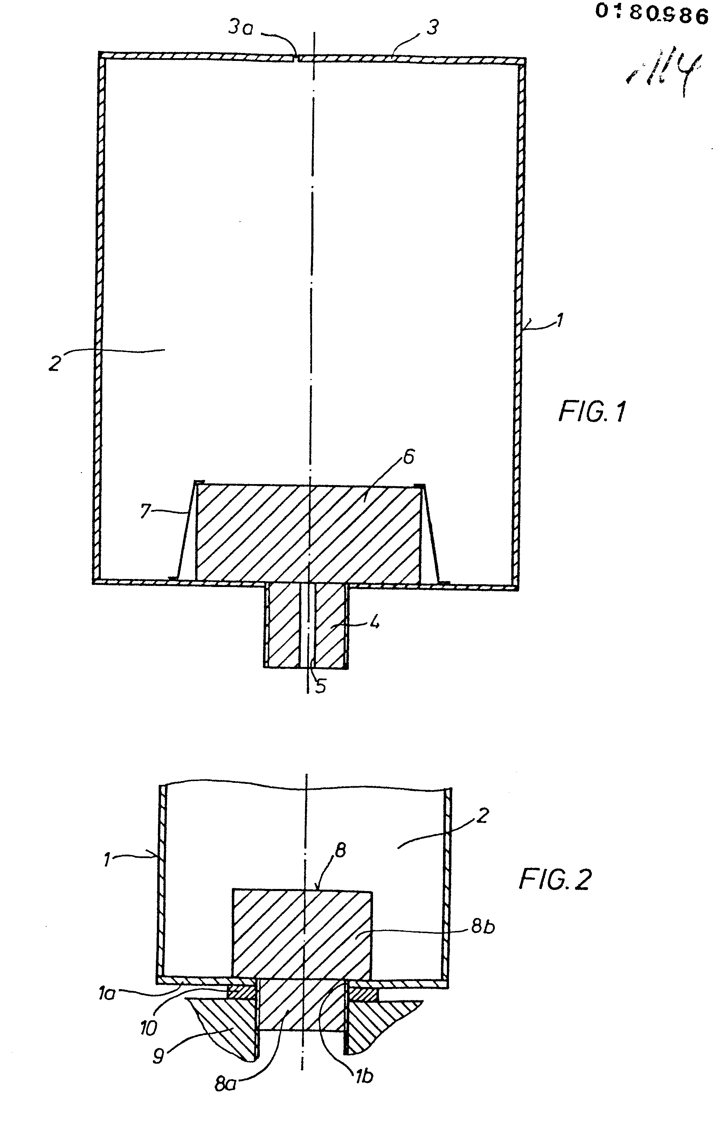

Die in Fig.1 dargestellte Vorrichtung zur genau dosierten Zugabe kleinster Mengen von Zusatzstoffen zu einem flüssigen oder gasförmigen Medium enthält einen Vorratsbehälter 1, der einen Vorratsraum 2 für den Zusatzstoff umschließt. Der Vorratsraum 2 ist nach oben durch einen mit einer Belüftungs-Öffnung 3a versehenen Deckel 3 abgeschlossen.

Im Bereich des Bodens ist der Vorratsbehälter 1 mit einem Gewindestutzen 4 verbunden (beispielsweise verschweißt), der eine durchgehende Bohrung 5 enthält.

Die Bohrung 5 wird zum Vorratsraum 2 hin durch ein Dosierelement 6 verschlossen, das beim dargestellten Ausführungsbeispiel durch Federklammern 7 auf den Boden des Vorratsbehälters 1 und damit auf die obere Fläche des Gewindestutzens 4 gedrückt wird.

Das Dosierelement 6 besteht aus einem hochporösen Sintermetall und läßt nur kleinste, genau dosierte Mengen des im Vorratsraum 2 befindlichen Zusatzstoffes in die Bohrung 5 gelangen, aus der der Zusatzstoff in das mit diesem Additiv zu versehende, flüssige oder gasförmige Medium gelangt.

Zu diesem Zweck wird der Gewindestutzen 4 des Vorratsbehälters 1 beispielsweise in eine Rohrleitung oder einen Behälter eingeschraubt, in dem sich das mit dem Additiv zu versehende, flüssige oder gasförmige Medium befindet.

Fig.2 veranschaulicht eine Ausführungsvariante, bei der das Dosierelement 8 mit einem Gewindestutzen 8a versehen ist, der zum Eingriff in einen mit Innengewinde versehenen Verbindungsflansch 9 eines das flüssige oder gasförmige Medium enthaltenden Raumes bestimmt ist. Das Dosierelement 8 liegt mit dem unteren Rand seines im Vorratsraum 2 befindlichen Teiles 8b auf dem Boden 1a des Vorratsbehälters 1 auf. Der Gewindestutzen 8a greift durch eine Bohrung 1b im Boden des Vorratsbehälters 1 frei hindurch. Zur Abdichtung ist zwischen dem Boden 1a des Vorratsbehälters 1 und dem Verbindungsflansch 9 ein Dichtungselement 10 angeordnet.

Bei diesem Ausführungsbeispiel wird somit der Vorratsbehälter 1 durch das zugleich als Befestigungsschraube ausgebildete Dosierelement 8 auf dem Verbindungsflansch 9 festgeschraubt.

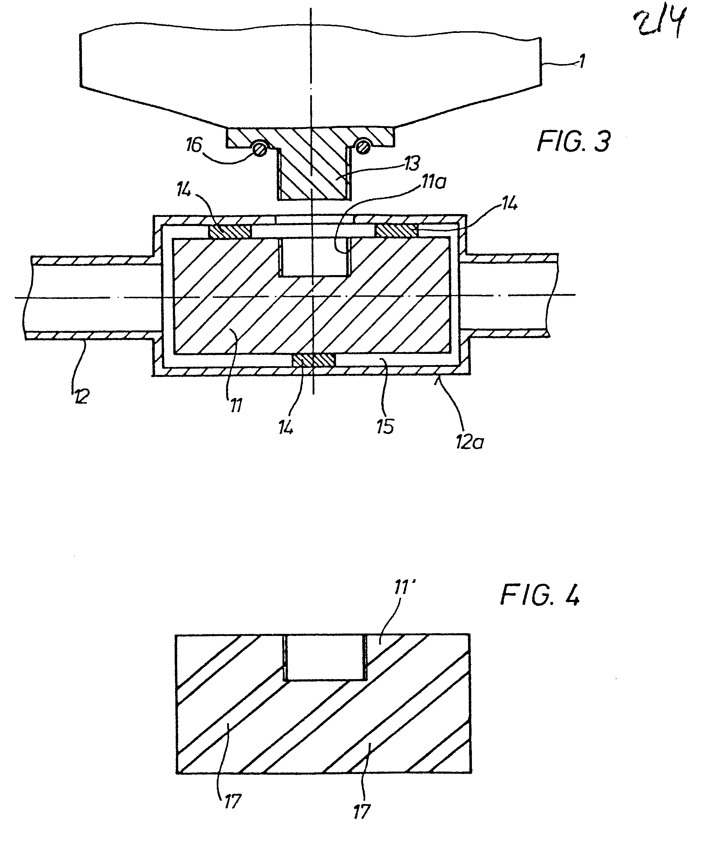

Bei dem in Fig.3 dargestellten weiteren Ausführungsbeispiel der Erfindung ist das aus hochporösem Sinterwerkstoff bestehende Dosierelement 11 in einer Kammer 12a angeordnet, die sich in einer Rohrleitung 12 befindet, die das mit dem Additiv zu versehende flüssige oder gasförmige Medium führt.

Das Dosierelement 11 ist mit einer Gewindebohrung 11a versehen, in die sich ein am Boden des Vorratsbehälters 1 vorgesehener Gewindestutzen 13 einschrauben läßt.

Das Dosierelement 11 ist in der Kammer 12a durch Abstandselemente 14 so gehalten, daß zwischen dem Umfang des Dosierelementes 11 und der Innenwand der Rohrleitung 12 ein lichter Abstand 15 vorhanden ist, durch den das mit dem Additiv zu versehende, flüssige oder gasförmige Medium hindurchströmen kann.

Durch Einschrauben des Gewindestutzens 13 in das Dosierelement 11 wird der Vorratsbehälter 1 auf der Rohrleitung 12 befestigt. Ein Dichtungselement 16 sorgt hierbei für die notwendige Abdichtung zwischen dem Gewindestutzen 13 und der Außenwand der Rohrleitung 12.

Um das Dosierelement 11 im Bedarfsfalle auswechseln zu können, ist die Rohrleitung 12 mit geeigneten (nicht dargestellten) Zugangsöffnungen versehen.

Fig.4 zeigt schließlich noch eine Variante, bei der das Dosierelement 11' ebenso wie das Dosierelement 11 gemäß Fig.3 durch einen im wesentlichen zylindrischen Körper gebildet wird, jedoch an seinem Umfang eine Anzahl von vorzugsweise wendelförmig verlaufenden Nuten 17 aufweist, durch die das mit dem Additiv zu versehende flüssige oder gasförmige Medium hindurchtritt. Bei Verwendung des Dosierelementes 11' kann der bei der Ausführung gemäß Fig.3 vorgesehene lichte Abstand 15 zwischen dem Umfang des Dosierelementes und der Innenwand der Kammer 12a ganz oder teilweise entfallen.

Die Nuten am Umfang des Dosierelementes können selbstverständlich auch in axialer Richtung verlaufen und dicht nebeneinanderliegen. Die Stege zwischen benachbarten Nuten können sich dabei an der Innenwand des das flüssige oder gasförmige Medium enthaltenden Raumes abstützen.

Während bei dem dargestellten Ausführungsbeispiel das Dosierelement eine im wesentlichen zylindrische Form besitzt, sind im Rahmen der Erfindung auch andere geometrische Formen möglich, beispielsweise Kegel, Kegelstumpf oder Kugel .

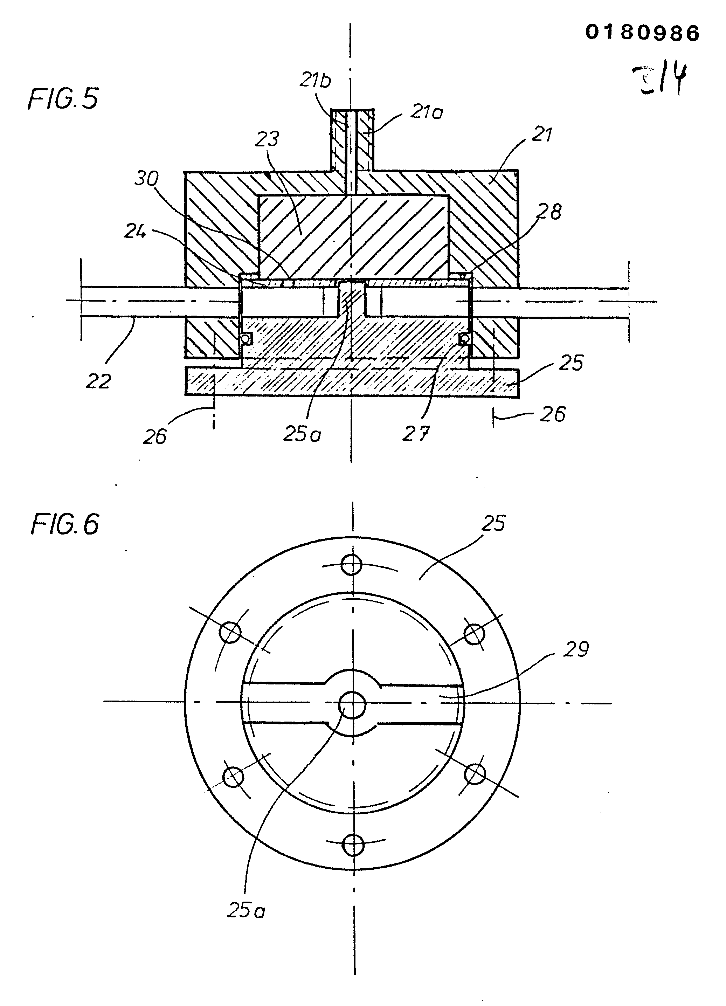

Die Fig.5 und 6 zeigen ein Ausführungsbeispiel, das besonders für Fälle geeignet ist, in denen eine unmittelbare Zugabe feinster Mengen von Zusatzstoffen für Durchlaufsysteme, insbesondere Kraftstoffsysteme, erforderlich ist. Diese Vorrichtung enthält ein Gehäuse 21, an das eine beispielsweise Kraftstoff oder Schmierstoff führende Leitung 22 angeschlossen ist. In das Gehäuse 21 ist ein aus hochporösem Sinterwerkstoff bestehendes Dosierelement 23 passend eingesetzt. Es wird nach unten zu durch eine Steuerscheibe 24 abgedeckt.

Die Fixierung des Dosierelementes 23 und der Steuerscheibe 24 im Gehäuse 21 erfolgt durch einen Steuerdeckel 25, der beispielsweise durch Schrauben 26 mit dem Gehäuse 21 verschraubt ist. Zur Abdichtung sind am Umfang des Steuerdeckels 25 sowie zwischen Gehäuse 21 und Steuerscheibe 24 je ein O-Ring 27 bzw. 28 vorgesehen.

Der Steuerdeckel 2ˉ ist mit einem Kanal 29 versehen, der in Verlängerung der Leitung 22 verläuft und dessen lichter Querschnitt mindestens dem der Leitung 22 entspricht.

Der Steuerdeckel 25 ist mit einem zentralen Zapfen 25a versehen, der den Kanal 29 durchsetzt und in eine zentrale Bohrung der Steuerscheibe 24 zentrierend eingreift. Die Steuerscheibe 24 wird durch den Steuerdeckel 25 nach oben gedrückt.

Die Steuerscheibe 24 ist mit wenigstens einer Bohrung 30 versehen, die sich oberhalb des Kanales 29 befindet und die drosselnd auf den Zusatzstoff wirkt, der über das Dosierelement 23 in den Kanal 29 (und damit in das durch die Leitung 22 und den Kanal 29 fließende Medium) gelangt.

Das Gehäuse 21 ist mit einem Schraubstutzen 21a versehen, der von einer Bohrung 21b durchsetzt wird. Mittels des Schraubstutzens 21a kann das Gehäuse 21 an einen (in Fig.5 nicht dargestellten) Vorratsraum für den Zusatzstoff angeschraubt werden. Der Zusatzstoff gelangt auf diese Weise vom Vorratsraum über die Bohrung 21b, das Dosierelement 23 und die Bohrung 30 in das flüssige Medium, das durch die Leitung 22 und den Kanal 29 strömt.

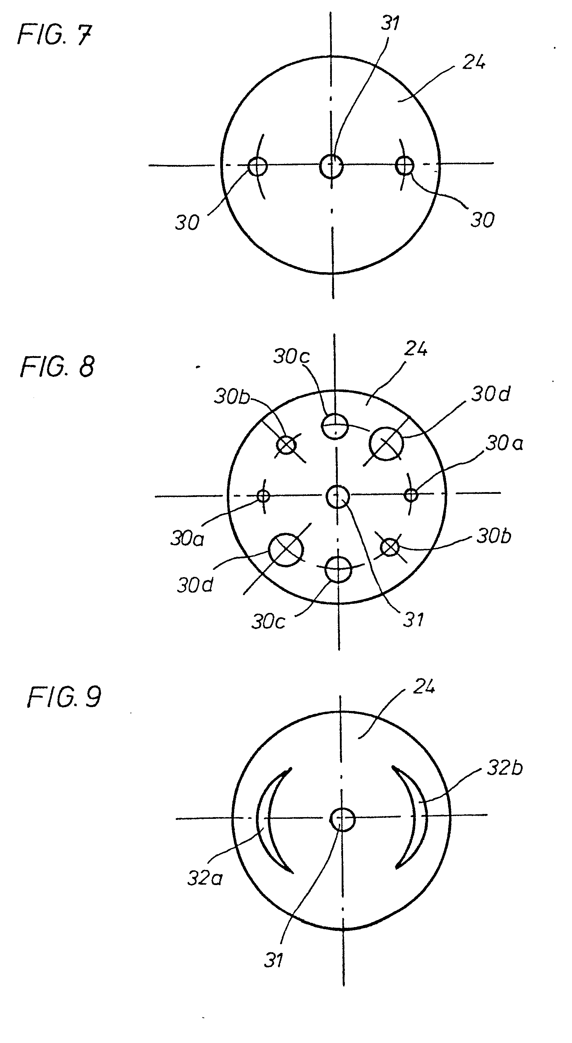

Bei dem Ausführungsbeispiel gemäß Fig.7 sind in der Steuerscheibe 24 außer der zum Eingriff des Zapfens 25a dienenden zentralen Bohrung 31 zwei als Drosselstellen wirkende Bohrungen 30 diametral gegenüberliegend angeordnet.

Bei der Variante gemäß Fig.8 sind demgegenüber in der Steuerscheibe 24 insgesamt vier Paare von je zwei Bohrungen 30a, 30b, 30c, 30d von unterschiedlichem Durchmesser vorgesehen. Die Bohrungsdurchmesser können beispielsweise zwischen 1 und 10 mm variieren. Je nach Stellung der Steuerscheibe 24 befinden sich somit Drosselstellen unterschiedlichen Durchlaßquerschnitts in der wirksamen Position über dem Kanal 29.

Die Einstellung der Steuerscheibe 24 auf den gewünschten Drosselquerschnitt kann beispielsweise manuell während der Montage erfolgen. Zweckmäßig sind dabei geeignete Rasten vorgesehen, um die einzelnen Positionen zu fixieren.

Abweichend von dem dargestellten Ausführungsbeispiel ist es jedoch auch möglich, die Steuerscheibe 24 verdrehbar auszubilden, so daß während des Betriebes der Drosselquerschnitt verändert werden kann. Die Verdrehung der Steuerscheibe 24 kann beispielsweise durch den Steuerdeckel 25 erfolgen.

Statt der dargestellten Verbindung zwischen dem Gehäuse 21 und dem Steuerdeckel 25 über Schrauben 26 ist beispielsweise auch eine Verbindung über ein Schraubgewinde oder einen Bajonett-Verschluß möglich.

Fig.9 zeigt schließlich noch ein Ausführungsbeispiel der Steuerscheibe 24, bei dem die Drosselöffnungen nicht durch kreisförmige Bohrungen, sondern durch zwei diametral einander gegenüberliegende, sichelförmige Schlitze 32a, 32b gebildet werden. Auch hierbei läßt sich durch Verdrehen der Steuerscheibe 24 der über dem Kanal 29 liegende wirksame Drosselquerschnitt verändern.

Mit der dargestellten Vorrichtung können Zusatzstoffe beispielsweise in Mengen zwischen 0,1 und 50 cm³/h, vorzugsweise zwischen 0,5 und 20 cm³/h genau dosiert werden.

Dr.-Ing. Dr. jur. VOLKMAR TETZNER

RECHTSANWALT und PATENTANWALT

Van.-Gogh.-Straße 3
8000 MÜNCHEN 71
Telefon: (089) 79 88 03
Telegramme: „Tetznerpatent München"
Telex: 5 212 282 pate d

KMS 5791/1

Patentansprüche:

1. Vorrichtung zur genau dosierten Zugabe kleinster Mengen von Zusatzstoffen zu einem flüssigen oder gasförmigen Medium, enthaltend

a) einen Vorratsraum (2) für den Zusatzstoff,

b) ein zwischen dem Vorratsraum (2) und dem das Medium führenden Raum angeordnetes Dosierelement (6, 8, 11, 11', 23), das für den Zusatzstoff durchlässig ist,

dadurch gekennzeichnet,

daß das Dosierelement (6, 8, 11, 11', 23) aus einem hochporösen Sinterwerkstoff besteht.

2. Vorrichtung nach Anspruch 1, dadurch gekennzeichnet, daß das Dosierelement (6, 8, 11, 11', 23) aus einem hochporösen Sintermetall, aus rostfreiem Stahl, aus Sinterbronze oder aus korrosionsfesten und hochtemperaturbeständigen Legierungen, insbesondere mit Gehalten von Nickel, Chrom, Molybdän, Titan, besteht.

3. Vorrichtung nach Anspruch 1, dadurch gekennzeichnet, daß die Porengröße des Sinterwerkstoffes zwischen 1 und 100 μm, vorzugsweise zwischen 1 und 20 μm, liegt.

4. Vorrichtung nach Anspruch 1, mit einem den Vorratsraum (2) für den Zusatzstoff bildenden Vorratsbehälter (1), der eine Austrittsöffnung für den Zusatzstoff enthält, dadurch gekennzeichnet, daß das Dosierelement (2, 8) im Vorratsbehälter (1) vor der Austrittsöffnung angeordnet ist.

5. Vorrichtung nach Anspruch 1, dadurch gekennzeichnet, daß das Dosierelement (11, 11') in dem das flüssige oder gasförmige Medium enthaltenden Raum angeordnet und von diesem Medium umspült ist.

6. Vorrichtung nach Anspruch 1, dadurch gekennzeichnet, daß das Dosierelement (23) in einem Gehäuse (21) angeordnet ist, das an eine das flüssige oder gasförmige Medium führende Leitung (22) angeschlossen und durch einen Deckel (25) verschlossen ist, der einen in Verlängerung der Anschlüsse der Leitung (22) liegenden Kanal (29) enthält.

7. Vorrichtung nach Anspruch 6, dadurch gekennzeichnet, daß zwischen dem Dosierelement (23) und dem Kanal (29) eine Steuerscheibe (24) angeordnet ist, die wenigstens eine Drosselöffnung (30, 30a bis 30d, 32a, 32b) enthält.

8. Vorrichtung nach Anspruch 7, dadurch gekennzeichnet, daß der über dem Kanal (29) befindliche wirksame Durchlaßquerschnitt der Drosselöffnung (30a bis 30d, 32a, 32b) einstellbar ist.

9. Vorrichtung nach Anspruch 8, dadurch gekennzeichnet, daß die Drosselöffnung durch mehrere in unterschiedlicher Umfangslage angeordnete Bohrungen (30a bis 30d) von unterschiedlichem Durchmesser, vorzugsweise zwischen 0,5 und 10 mm, gebildet werden.

10. Vorrichtung nach Anspruch 8, dadurch gekennzeichnet, daß die Drosselöffnungen durch Schlitze (32a, 32b) von veränderlicher Schlitzweite gebildet werden.

FIG.1

FIG.2

0180986

2/4

16  13  11a  14

14

12

11  14  15  12a

FIG. 3

11'

17  17

FIG. 4

0180986

FIG.5

21b
21a
23
30
24
22
26
25a
27
28
21
25
26

FIG.6

25
29
25a

FIG. 7

FIG. 8

FIG. 9